# EUROPEAN PATENT APPLICATION

(11) **EP 4 835 384 A1**
(43) Date of publication of application: **04.11.2026**
(21) Application number: 24847347.2
(22) Date of filing: 31.05.2024
(51) Int. Cl.: F25D 29/00

(54) **ARTICLE MEASUREMENT METHOD APPLIED TO VEHICLE-MOUNTED REFRIGERATOR, AND APPARATUS THEREFOR**

(30) Priority: 28.12.2023 CN 202311826933
(71) Applicant: Guangdong Iceco Enterprise Co., Ltd, Zhongshan, Guangdong 528400 (CN)
(72) Inventor: LUO, Shaohui, Zhongshan, Guangdong 528400 (CN); LIU, Yang, Zhongshan, Guangdong 528400 (CN); ZHANG, Yonggang, Zhongshan, Guangdong 528400 (CN); HAN, Mengru, Zhongshan, Guangdong 528400 (CN)
(74) Representative: Longoni, Alessandra
(86) International application number: PCT/CN2024/096789
(87) International publication number: WO 2025/138586

(57) **Abstract**

The present invention relates to the field of refrigerator item detection, and particularly discloses an item detection method applied to a car refrigerator; the item detection method comprises: obtaining item weight data K0 in a refrigerator drawer; performing comparison analysis with a preset comparison factor according to the obtained item weight data K0; determining whether to activate an alarm or remind a user according to a result of the comparison analysis. The present invention also provides a device for applying the above item detection method for the car refrigerator. The method and the device therefor of the present invention are good in application effect, rich in functionality, high in degree of intelligence, advanced in technology and strong in practicability.

## Description

### Technical Field

The present invention relates to the field of refrigerator item detection, in particular to an item detection method applied to a car refrigerator, and a device therefor.

### Background

At present, the development of passenger vehicles is very rapid. Especially, with the development of new energy passenger vehicles, users have higher and higher requirements for the vehicle life configuration. Car refrigerators have become an indispensable configuration, enriching users' vehicle life experience.

Users are accustomed to placing commonly used items such as beverages in car refrigerators. After investigation, it is found that detecting these commonly used items to remind users of item-related information is a very popular function of a car refrigerator; however, currently, item detection is provided less in car refrigerators. Even if item detection is provided, its function is very simple, and only whether there are items in the car refrigerator is detected, which cannot meet the actual use needs of users. Therefore, improvement needs to be continuously made.

### Summary of the Invention

In order to solve the above-mentioned problems existing in the prior art, on one hand, embodiments of the present invention provide an item detection method applied to a car refrigerator, comprising:
obtaining item weight data K0 in a refrigerator drawer;
performing comparison analysis with a preset comparison factor according to the obtained item weight data K0;
determining whether to activate an alarm or remind a user according to a result of the comparison analysis.

On the other hand, embodiments of the present invention also provides a device, comprising:
a first acquisition module for obtaining item weight data K0 in a refrigerator drawer;
a first comparison analysis module for performing comparison analysis with a preset comparison factor according to the obtained item weight data K0;
an alarm module for determining whether to activate an alarm or remind a user according to a result of the comparison analysis.

In the present invention, weight data of an item in a refrigerator drawer can be obtained, and according to the weight data, comparison analysis can be performed with various comparison factors, thus making a determination and giving an alarm, or reminding a user; and in the present invention, big data analysis can also be performed according to the item weight data obtained for multiple times, thus summarizing and analysing usage habits of a user, so as to provide more targeted reminders; thirdly, in the present invention, connection with an external mobile terminal is also allowed to send information about an item in a car refrigerator and receive an instruction of the external mobile terminal; therefore, the method and the device therefor of the present invention are good in application effect, rich in functionality and strong in practicability.

### Brief Description of the Drawings

In order to explain the technical solutions in embodiments of the present invention or in the prior art more clearly, drawings required to be used in descriptions of the embodiments or the prior art are briefly introduced below. Obviously, the drawings in the following descriptions are merely some embodiments of the present invention, and for those of ordinary skill in the art, other drawings can also be obtained according to these drawings under the premise of not exerting creative efforts.
FIG. 1 is a schematic flow chart of a first embodiment of an item detection method applied to a car refrigerator of the present invention;
FIG. 2 is a schematic flow chart of a second embodiment of the item detection method applied to the car refrigerator of the present invention;
FIG. 3 is a schematic flow chart of a third embodiment of the item detection method applied to the car refrigerator of the present invention;
FIG. 4 is a schematic flow chart of a fourth embodiment of the item detection method applied to the car refrigerator of the present invention;
FIG. 5 is a schematic flow chart of a fifth embodiment of the item detection method applied to the car refrigerator of the present invention;
FIG. 6 is a schematic structural diagram of a first embodiment of a device of the present invention;
FIG. 7 is a schematic structural diagram of a second embodiment of the device of the present invention;
FIG. 8 is a schematic structural diagram of a third embodiment of the device of the present invention;
FIG. 9 is a structural schematic diagram of a fourth embodiment of the device of the present invention.

### Detailed Description of Embodiments

The technical solutions in embodiments of the present invention will be described clearly and completely below in conjunction with the accompanying drawings in the embodiments of the present invention. Obviously, the described embodiments are only a part of embodiments of the present invention, but not all of them. On the basis of the embodiments of the present invention, all other embodiments obtained by those of ordinary skill in the art without exerting creative efforts should fall within the scope of protection of the present invention.

### First embodiment of method

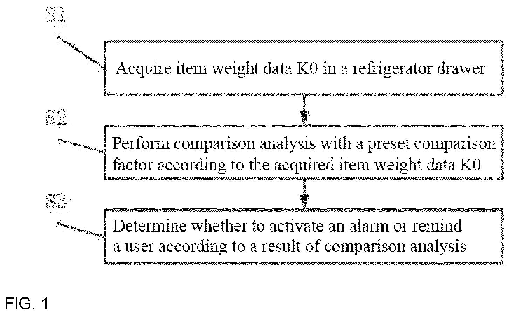

As shown in FIG. 1, it is a schematic flow chart of a first embodiment of an item detection method applied to a car refrigerator of the present invention. The method comprises:
step S1: obtaining item weight data K0 in a refrigerator drawer;
step S2: performing comparison analysis with a preset comparison factor according to the obtained item weight data K0;
step S3: determining whether to activate an alarm or remind a user according to a result of the comparison analysis.

Exemplarily, in step S1 of the present embodiment, a manner of obtaining the item weight data K0 in the refrigerator drawer comprises:
arranging four half-bridge resistive sensors at four corners of a bottom part of the refrigerator drawer, forming a full-bridge circuit through parallel connection, installing a support plate on the four sensors, and placing an item on the support plate; a gravity of the item acting on the support plates, and the support plate transferring the gravity to deformed parts of the sensors, causing a change in a resistance value; through an AD circuit, converting the resistance value into a gravity value, to obtain the weight data K0.

As another manner, the car refrigerator can be provided with a beverage area and a fruit area, and item quantity statuses in the beverage area and the fruit area are obtained respectively;
a manner of respectively obtaining the item quantity statuses in the beverage area and the fruit area comprises: setting up a camera device to identify item quantities in the beverage area and the fruit area in the refrigerator through captured images.

In step S2, the comparison factor may include multiple factors, such as weight value, quantity value, time value, etc.

### Second embodiment of method

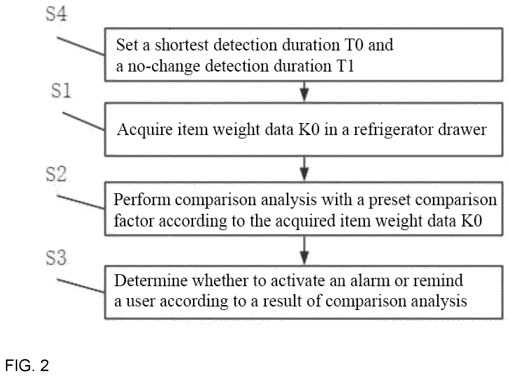

As shown in FIG. 2, it is a schematic flow chart of a second embodiment of the item detection method applied to the car refrigerator of the present invention. The method comprises:
step S4: setting a shortest detection duration T0 and a no-change detection duration T1;
step S1: obtaining item weight data K0 in a refrigerator drawer;
in the present embodiment, in step S1, obtaining the item weight data K0 is obtaining item weight data that exceeds the shortest detection time T0;
exemplarily, the shortest detection duration T0 is set to 2 seconds, and then in step S1, the item weight data K0 obtained is only effective if it is item data that exceeds 2 seconds. This is mainly to prevent an error caused by a weight change that is due to brief bouncing of an item in a refrigerator as a result of vehicle bumping during vehicle running.
step S2: performing comparison analysis with a preset comparison factor according to the obtained item weight data K0;
principles of this step are the same as that of the corresponding step in the first embodiment of the method, and will not be described again.
step S3: determining whether to activate an alarm or remind a user according to a result of the comparison analysis;
principles of this step are the same as that of the corresponding step in the first embodiment of the method, and will not be described again.

In the present embodiment, if after the item weight data K0 exceeds the no-change detection period T1, the change value of the item weight data is less than a preset change threshold, then an alarm is activated or the user is reminded that the item has not been used for a long time; exemplarily, the no-change detection duration T1 is set to 10 days, or 15 days etc.; the preset change threshold can be set to 200 g, or 500 g, etc.; therefore, if the item weight data K0 exceeds 10 days, and a weight change value of the item weight data is within a range of 200 g, it means that most of items in the refrigerator may not have been taken out, there is a risk of expiration, and it is required to clean up in time.

### Third embodiment of method

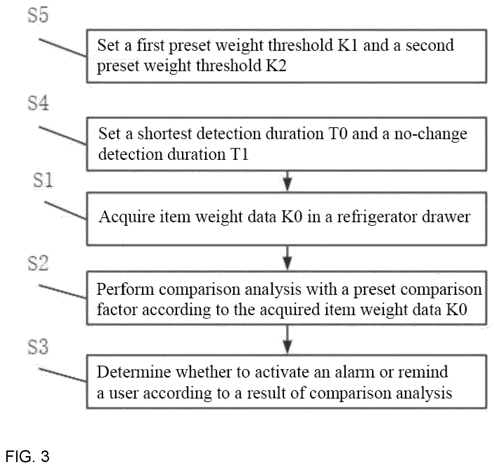

As shown in FIG. 3, it is a schematic flow chart of a third embodiment of the item detection method applied to the car refrigerator of the present invention. The method comprises:
step S5: setting a first preset weight threshold K1 and a second preset weight threshold K2;
step S4: setting a shortest detection duration T0 and a no-change detection duration T1;
principles of this step are the same as those of the corresponding step in the second embodiment of the method, and will not be described again.
step S1: obtaining item weight data K0 in a refrigerator drawer;
principles of this step are the same as those of the corresponding step in the second embodiment of the method, and will not be described again.
step S2: performing comparison analysis with a preset comparison factor according to the obtained item weight data K0;

In the present embodiment, step S2 comprises:
if the item weight data K0 is less than the first preset weight threshold K1, activating an alarm, or reminding the user that the item is insufficient;
if the item weight data K0 is greater than the second preset weight threshold K2, activating an alarm, or reminding the user that it is full of items.
step S3: determining whether to activate an alarm or remind a user according to a result of the comparison analysis;

In the present embodiment, for example, the first preset weight threshold K1 is set to 300 g, because generally 1 bottle of small Coke or other beverage is about 350 ml, or the weight of 1 apple is 100 g, etc.; if it is detected that the item weight data K0 is less than 300 g, it means that there is not 1 bottle of water in the car refrigerator, and then the alarm is activated, or the user is reminded that the item is insufficient;
exemplarily, a maximum capacity of the car refrigerator is the second preset weight threshold K2, and generally, 6 to 10 bottles of beverages or 3 to 5 Jin of fruits such as apples can be loaded. Then, K2 is set to 3000 g. If it is detected that the item weight data K0 is greater than 3000 g, then the alarm is activated, or the user is reminded that it is full of items, and the user is reminded that it is not required to purchase new items and put them in the refrigerator.

### Fourth embodiment of method

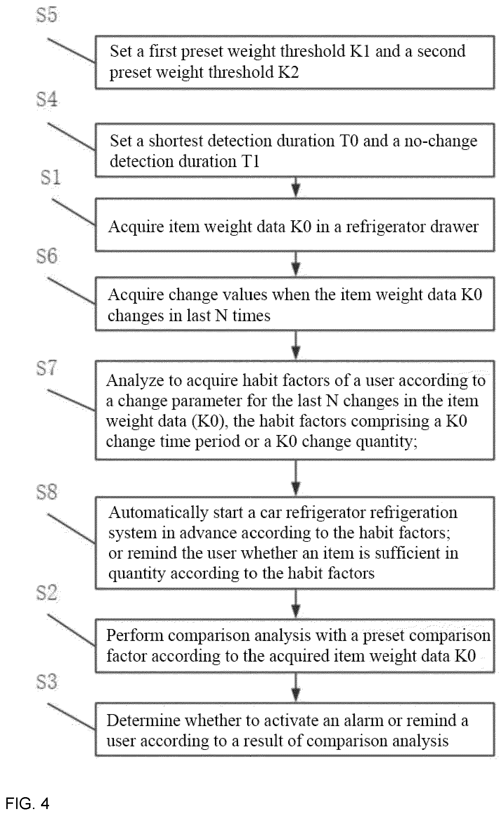

As shown in FIG. 4, it is a schematic flow chart of a fourth embodiment of the item detection method applied to the car refrigerator of the present invention. The method comprises:
step S5: setting a first preset weight threshold K1 and a second preset weight threshold K2;
principles of this step are the same as those of the corresponding step in the third embodiment of the method, and will not be described again.
Step S4: setting a shortest detection duration T0 and a no-change detection duration T1;
principles of this step are the same as those of the corresponding step in the second embodiment of the method, and will not be described again.
Step S1: obtaining item weight data K0 in a refrigerator drawer;
principles of this step are the same as that of the corresponding step in the first embodiment of the method, and will not be described again.
Step S6: obtaining change values when the item weight data K0 changes in last N times;
step S7: analysing to obtain habitual factors of the user according to a change parameter for the last N changes in the item weight data K0; the habitual factors comprising a K0 change time period or a K0 change quantity;
exemplarily, in the present embodiment, change values for the last 20 changes in the item weight data K0 are obtained, and big data analysis is performed; for example, among the last 20 changes, there are 10 changes between 1 pm and 2 pm, or changes occur between 5 pm and 6 pm, which means that a user of a car often takes an item from a refrigerator from 1 pm to 2 pm or from 5 pm to 6 pm;
for another example: among the last 20 changes, there are 10 changes in item weight, i.e., a reduction of 700 g, which means that the user of the car often takes out 2 bottles of water each time, and it is possible that there are often 2 people riding in the car.

Step S8: automatically starting a car refrigerator refrigeration system in advance according to habitual factors; or reminding the user whether the item is sufficient in quantity according to the habitual factors.

In this step, operations are performed according to analysis results of step S7; for example, the car refrigerator refrigeration system is automatically turned on half an hour in advance before 1 pm and 5 pm; or when the weight of an item in the car refrigerator is less than 700 g, or is less than 1400 g (less than 4 bottles of water, only enough for two people to use once), the user is reminded or an alarm is given.
step S2: performing comparison analysis with a preset comparison factor according to the obtained item weight data K0;
principles of this step are the same as that of the corresponding step in the first embodiment of the method, and will not be described again.
step S3: determining whether to activate an alarm or remind a user according to a result of the comparison analysis;
principles of this step are the same as that of the corresponding step in the first embodiment of the method, and will not be described again.

It should be noted that, in the present embodiment, step S7 and step S8 are executed simultaneously with step S1 and step S2.

### Fifth embodiment of method

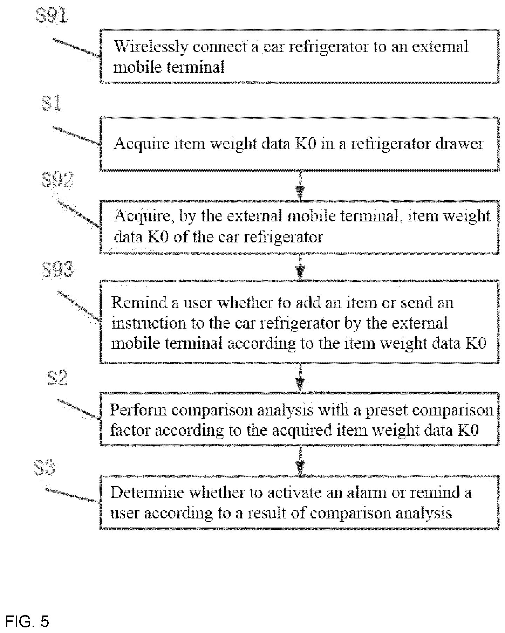

As shown in FIG. 5, it is a schematic flow chart of a fourth embodiment of the item detection method applied to the car refrigerator of the present invention. The method comprises:
step S91: wirelessly connecting the car refrigerator to an external mobile terminal;
step S1: obtaining item weight data K0 in a refrigerator drawer;
step S92: obtaining, by the external mobile terminal, item weight data K0 of the car refrigerator;
step S93: reminding a user whether it is required to add an item or sending an instruction to the car refrigerator by the external mobile terminal according to the item weight data K0;
step S2: performing comparison analysis with a preset comparison factor according to the obtained item weight data K0;
principles of this step are the same as that of the corresponding step in the first embodiment of the method, and will not be described again.
step S3: determining whether to activate an alarm or remind a user according to a result of the comparison analysis;
principles of this step are the same as that of the corresponding step in the first embodiment of the method, and will not be described again.

It should be noted that, in the present embodiment, step S93 and step S2 can be executed simultaneously.

Therefore, in the present invention, a mobile phone can be wirelessly connected to the car refrigerator, for example, wireless connection is performed through WIFI, Bluetooth or mobile communication traffic; after the connection, the car refrigerator sends item data of the refrigerator, such as a quantity of beverages or fruits, to the mobile phone, then the user will know whether it is required to replenish the item; or the user sends an instruction to the car refrigerator through the mobile phone, to turn on a refrigeration system of the car refrigerator.

### First embodiment of device

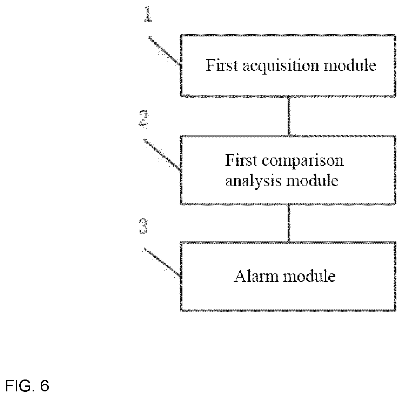

As shown in FIG. 6, it is a schematic structural diagram of a first embodiment of the device of the present invention; in the present embodiment, the device of the item detection method applied to the car refrigerator comprises:
a first acquisition module 1 for obtaining item weight data K0 in a refrigerator drawer;
a first comparison analysis module 2 for performing comparison analysis with a preset comparison factor according to the obtained item weight data K0;
an alarm module 3 for determining whether to activate an alarm or remind a user according to a result of the comparison analysis.

In the first acquisition module 1, a manner of obtaining the item weight data K0 in the refrigerator drawer comprises:
arranging four half-bridge resistive sensors at four corners of a bottom part of the refrigerator drawer, forming a full-bridge circuit through parallel connection, installing a support plate on the four sensors, and placing an item on the support plate; a gravity of the item acting on the support plates, and the support plate transferring the gravity to deformed parts of the sensors, causing a change in a resistance value; through an AD circuit, converting the resistance value into a gravity value, to obtain the weight data K0.

As another manner, the car refrigerator can be provided with a beverage area and a fruit area, and item quantity statuses in the beverage area and the fruit area are obtained respectively;
a manner of respectively obtaining the item quantity statuses in the beverage area and the fruit area comprises: setting up a camera device to identify item quantities in the beverage area and the fruit area in the refrigerator through captured images.

In the first comparison analysis module 2, the comparison factor may include multiple factors, such as weight value, quantity value, time value, etc.

As another implementation manner, in the present embodiment, the first acquisition module 1 can obtain item quantity statuses in the beverage area and the fruit area respectively; for example, image capturing is performed through a camera unit, and then quantities of items in the beverage area and the fruit area in the refrigerator are identified and analysed through an analysis unit.

### Second embodiment of device

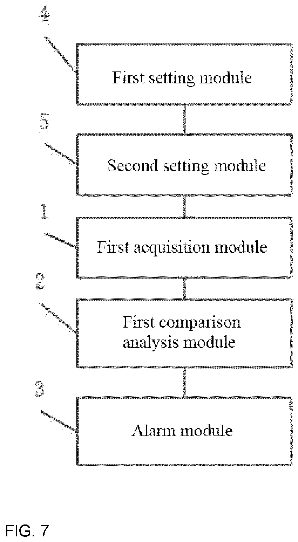

As shown in FIG. 7, it is a schematic structural diagram of a second embodiment of the device of the present invention; in the present embodiment, ahead of a first acquisition module, the device also comprises:
a first setting module 4 for:
setting a shortest detection duration T0, and a no-change detection duration T1;
obtaining item weight data K0 being obtaining item weight data that exceeds the shortest detection time T0;
in the present embodiment, if after the item weight data K0 exceeds the no-change detection duration T1, a change value of the item weight data is less than a preset change threshold, then activating an alarm or reminding a user that an item has not been taken for a long time.
a second setting module 5 for:
   setting a first preset weight threshold K1 and a second preset weight threshold K2.

Therefore, in the present embodiment, if the item weight data K0 is less than the first preset weight threshold K1, then the alarm is activated, or the user is reminded that an item is insufficient;
if the item weight data K0 is greater than the second preset weight threshold K2, activating an alarm, or reminding the user that it is full of items.
a first acquisition module 1 for obtaining item weight data K0 in a refrigerator drawer; a first comparison analysis module 2 for performing comparison analysis with a preset comparison factor according to the obtained item weight data K0;
an alarm module 3 for determining whether to activate an alarm or remind a user according to a result of the comparison analysis.

Therein, working principles of the first acquisition module 1, the first comparison analysis module 2 and the alarm module 3 are the same as those of corresponding structures of the first embodiment of the device, and will not be described again.

### Third embodiment of device

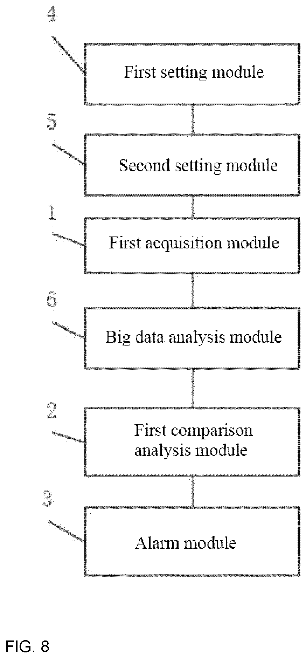

As shown in FIG. 8, it is a structural schematic diagram of a third embodiment of the device of the present invention; in the present embodiment, a first setting module 4 is used for:
setting a shortest detection duration T0, and a no-change detection duration T1;
obtaining item weight data K0 being obtaining item weight data that exceeds the shortest detection time T0;
a second setting module 5 for:
   setting a first preset weight threshold K1 and a second preset weight threshold K2;
   a first acquisition module 1 for obtaining item weight data K0 in a refrigerator drawer; therein, working principles of the first setting module 4, the second setting module 5 and the first acquisition module 1 are the same as those of corresponding structures of the second embodiment of the device, and will not be described again.

The device also comprises a big data analysis module 6 for:
analysing to obtain habitual factors of the user according to a change parameter for the last N changes in the item weight data K0; the habitual factors comprising a K0 change time period and a K0 change quantity.

Therefore, in the present embodiment, a car refrigerator refrigeration system is automatically started in advance according to the habitual factors; or the user is reminded whether the item is sufficient in quantity according to the habitual factors.
a first comparison analysis module 2 for performing comparison analysis with a preset comparison factor according to the obtained item weight data K0;
an alarm module 3 for determining whether to activate an alarm or remind a user according to a result of the comparison analysis.

Therein, working principles of the first comparison analysis module 2 and the alarm module 3 are the same as those of corresponding structures of the first embodiment of the device, and will not be described again.

### Fourth embodiment of device

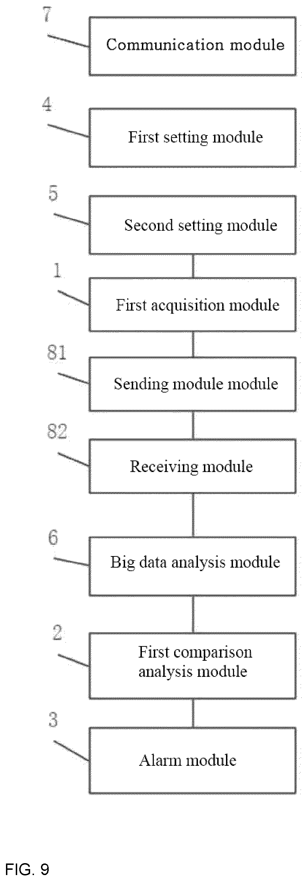

As shown in FIG. 9, it is a structural schematic diagram of a fourth embodiment of the device of the present invention; in the present embodiment, the device comprises:
a communication module 7 for: wirelessly connecting an external mobile terminal;
for example, performing wireless connection through WIFI, Bluetooth or mobile communication traffic;
a first setting module 4 for:
   setting a shortest detection duration T0, and a no-change detection duration T1;
   obtaining item weight data K0 being obtaining item weight data that exceeds the shortest detection time T0;
   a second setting module 5 for:
      setting a first preset weight threshold K1 and a second preset weight threshold K2;
      a first acquisition module 1 for obtaining item weight data K0 in a refrigerator drawer;
      therein, working principles of the first setting module 4, the second setting module 5 and the first acquisition module 1 are the same as those of corresponding structures of the third embodiment of the device, and will not be described again.

A sending module 81 is used for sending item weight data K0 of a car refrigerator to the external mobile terminal;
a receiving module 82 is used for receiving an instruction sent by the external mobile terminal.

Therefore, in the present invention, a mobile phone can be wirelessly connected to the car refrigerator, for example, wireless connection is performed through WIFI, Bluetooth or mobile communication traffic; after the connection, the car refrigerator sends item data of the refrigerator, such as a quantity of beverages or fruits, to the mobile phone, then the user will know whether it is required to replenish the item; or the user sends an instruction to the car refrigerator through the mobile phone, to turn on a refrigeration system of the car refrigerator.

A big data analysis module 6 is used for:
analysing to obtain habitual factors of the user according to a change parameter for the last N changes in the item weight data K0; the habitual factors comprising a K0 change time period and a K0 change quantity.
a first comparison analysis module 2 for performing comparison analysis with a preset comparison factor according to the obtained item weight data K0;
an alarm module 3 for determining whether to activate an alarm or remind a user according to a result of the comparison analysis.

Therein, working principles of the big data analysis module 6, the first comparison analysis module 2 and the alarm module 3 are the same as those of corresponding structures of the third embodiment of the device, and will not be described again.

Therefore, in the present invention, item weight data in a refrigerator drawer can be obtained, and comparison analysis with various comparison factors can be performed according to the weight data, thus making a determination and giving an alarm, or reminding a user; in addition, in the present invention, big data analysis can also be performed according to the item weight data obtained multiple times, thus summarizing and analysing usage habits of the user, so as to provide more targeted reminders; thirdly, in the present invention, connection with an external mobile terminal is also allowed to send information about the item in a car refrigerator and receive an instruction of the external mobile terminal. Therefore, the method and the device therefor of the present invention are good in application effect, rich in functionality and strong in practicability.

Those of ordinary skill in the art can understand that all or part of the processes in the methods of the above embodiments can be completed by instructing relevant hardware through a computer program. The program can be stored in a computer-readable storage medium. When being executed, the program may comprise, for example, the processes of the above method embodiments. Therein, the storage medium may be a magnetic disk, an optical disk, a read-only memory (ROM) or a random access memory (RAM), etc.

The above only shows preferred embodiments of the present invention and is not intended to limit the present invention. Any modifications, equivalent substitutions and improvements and the like that are made within the spirit and principles of the present invention shall be comprised in the scope of protection of the present invention.

## Claims

1. An item detection method applied to a car refrigerator, **characterized in that**, the item detection method comprises:
obtaining item weight data (K0) in a refrigerator drawer;
performing comparison analysis with a preset comparison factor according to the obtained item weight data (K0);
determining whether to activate an alarm or remind a user according to a result of the comparison analysis.

2. The item detection method applied to a car refrigerator according to Claim 1, **characterized in that**,
before the step of obtaining the item weight data (K0) in the refrigerator drawer, the item detection method also comprises:
setting a shortest detection duration (T0) and a no-change detection duration (T1);
obtaining the item weight data (K0) being obtaining item weight data that exceeds the shortest detection time (T0);
the step of performing comparison analysis with the preset comparison factor according to the obtained item weight data (K0) comprises:
if after the item weight data (K0) exceeds the no-change detection duration (T1), a change value of the item weight data is less than a preset change threshold, activating the alarm or reminding the user that the item has not been used for a long time.

3. The item detection method applied to a car refrigerator according to Claim 2, **characterized in that**,
before the step of obtaining the item weight data (K0) in the refrigerator drawer, the item detection method also comprises:
setting a first preset weight threshold (K1) and a second preset weight threshold (K2);
the step of performing comparison analysis with the preset comparison factor according to the obtained item weight data (K0) comprises:
if the item weight data (K0) is less than the first preset weight threshold (K1), activating an alarm or reminding the user that the item is insufficient;
if the item weight data (K0) is greater than the second preset weight threshold (K2), activating the alarm or reminding the user that it is full of items.

4. The item detection method applied to a car refrigerator according to Claim 1, **characterized in that**,
after the step of obtaining the item weight data (K0) in the refrigerator drawer, the item detection method also comprises:
obtaining a change parameter for the last N changes in the item weight data (K0);
analysing to obtain habitual factors of the user according to the change parameter for the last N changes in the item weight data (K0); the habitual factors comprising a change time period of the item weight data (K0) or a change quantity of the item weight data (K0);
according to habitual factors, automatically starting a car refrigerator refrigeration system in advance; or according to the habitual factors, reminding the user whether the item is sufficient in quantity.

5. The item detection method applied to a car refrigerator according to Claim 1, **characterized in that** the item detection method comprises:
providing the car refrigerator with a beverage area and a fruit area, and respectively obtaining item quantity statuses in the beverage area and the fruit area;
a manner of respectively obtaining the item quantity statuses in the beverage area and the fruit area comprising: setting up a camera device to identify item quantities in the beverage area and the fruit area in the refrigerator through captured images.

6. The item detection method applied to a car refrigerator according to Claim 1, **characterized in that** a manner of obtaining the item weight data (K0) in the refrigerator drawer comprises:
arranging four half-bridge resistive sensors at four corners of a bottom part of the refrigerator drawer, forming a full-bridge circuit through parallel connection, installing a support plate on the four sensors, and placing an item on the support plate; a gravity of the item acting on the support plate, and the support plate transferring the gravity to deformed parts of the sensors, causing a change in a resistance value; through an AD circuit, converting the resistance value into a gravity value to obtain the item weight data (K0).

7. The item detection method applied to a car refrigerator according to Claim 1, **characterized in that** the item detection method comprises:
wirelessly connecting the car refrigerator to an external mobile terminal;
obtaining, by the external mobile terminal, the item weight data (K0) of the car refrigerator;
reminding the user whether it is required to add the item or sending an instruction to the car refrigerator by the external mobile terminal according to the item weight data (K0).

8. A device for applying the method of Claim 1, **characterized in that** the device comprises:
a first acquisition module for obtaining item weight data (K0) in a refrigerator drawer;
a first comparison analysis module for performing comparison analysis with a preset comparison factor according to the obtained item weight data (K0);
an alarm module for determining whether to activate an alarm or remind a user according to a result of the comparison analysis.

9. The device according to Claim 8, **characterized in that** the device also comprises:
a first setting module for:
setting a shortest detection duration (T0) and a no-change detection duration ((T1));
obtaining the item weight data (K0) being obtaining item weight data that exceeds the shortest detection time (T0);
a second setting module for:
setting a first preset weight threshold (K1) and a second preset weight threshold (K2). a big data analysis module for:
analysing to obtain habitual factors of the user according to a change parameter for the last N changes in the item weight data (K0); the habitual factors comprising a change time period of the item weight data (K0), and a change quantity of the item weight data (K0);
a car refrigerator being provided with a beverage area and a fruit area,
the first acquisition module being used for respectively obtaining item quantity statuses in the beverage area and the fruit area;
a manner of respectively obtaining the item quantity statuses in the beverage area and the fruit area comprising: setting up a camera device to identify item quantities in the beverage area and the fruit area in the refrigerator through captured images.

10. The device according to Claim 8, **characterized in that** the device comprises:
a communication module for wirelessly connecting an external mobile terminal;
a sending module for sending item weight data (K0) of a car refrigerator to the external mobile terminal;
a receiving module for receiving an instruction sent by the external mobile terminal.
